# EUROPEAN PATENT SPECIFICATION

(11) **EP 4 597 049 B1**
(45) Date of publication and mention of the grant of the patent: **12.08.2026**
(21) Application number: 25154775.8
(22) Date of filing: 29.01.2025
(51) Int. Cl.: G01F 11/38, B01F 33/841, B01F 33/85, B01F 35/88, G01F 13/00

(54) **DOSING DEVICE FOR DOSING MACHINE AND DOSING MACHINE COMPRISING SUCH A DEVICE**
DOSIERVORRICHTUNG FÜR EINE DOSIERMASCHINE UND DOSIERMASCHINE MIT EINER SOLCHEN VORRICHTUNG
DISPOSITIF DE DOSAGE POUR MACHINE DE DOSAGE ET MACHINE DE DOSAGE COMPRENANT UN TEL DISPOSITIF

(30) Priority: 05.02.2024 IT 202400002292
(43) Date of publication of application: 06.08.2025
(73) Proprietor: LOGIC S.r.l., 27020 Travaco' Siccomario (PV) (IT)
(72) Inventor: Mantovani, Lucio, 20142 Milano MI (IT); Mantovani, Giancarlo, 20141 Milano MI (IT)
(74) Representative: Rondano, Davide

(56) References cited:
- EP-A1- 0 604 257
- US-A- 3 160 331
- US-A- 5 078 302

## Description

### Technical field of the invention

The present invention generally relates to a dosing machine for delivering dosed amounts of fluid products, such as for example (but not exclusively) fragrances, raw materials for the cosmetic or pharmaceutical industry, and dyes for the preparation of paints or inks.

More specifically, the present invention relates to a dosing device for such a machine.

### State of the art

A dosing machine for delivering dosed amounts of fluid products typically comprises a plurality of containers, each designed to contain a given fluid product, and a dosing head having a corresponding plurality of dosing devices, each of which is connected to a respective container via a respective conduit, or a respective pair of conduits (a delivery conduit and a return conduit), to deliver a dosed amount of the fluid product contained in that container.

According to an example of architecture of a dosing head of a dosing machine, as known from EP0786287, the dosing devices are arranged next to each other according to a carousel arrangement and are each movable in a radial direction between a rest position, in which the dosing device is spaced apart from the centre of the dosing head, and a working position, in which the dosing device is arranged with its delivering nozzle aligned with the centre of the dosing head, where there is a special opening to allow the passage of the fluid product, in order to deliver the desired amount of fluid product into a tank located underneath the dosing head. The operation of the machine therefore envisages that, depending on the fluid product(s) with which the tank is to be filled, one or more dosing devices are brought (one after the other, if fluid products contained in several containers are to be delivered) into the working position to deliver the respective fluid product.

Regardless of the type of architecture used for the dosing head, the dosing device is basically a valve comprising a hollow body, which is provided at its bottom with a vertical-axis delivering nozzle from which the fluid product is discharged in use, and a closure member, which is received in a vertically movable manner within that body. A supply conduit, through which the fluid product flows from the respective container to the dosing device, and, where present, also a return conduit, through which the fluid product is recirculated back to the container, are connected to the body of the dosing device. Attached to the closure member is a rod which protrudes upwardly from the body of the dosing device and upon which suitable control means act to cause movement of the closure member between an open position and a closed position, in which fluid communication between the supply conduit and the delivering nozzle is allowed or interrupted, respectively. According to the solution known from EP0786287, when the dosing device to be used is in the working position, said control means first engage the rod of the closure member of that device and then move the rod upwards or downwards to cause the closure member to move from the open position to the closed position or vice versa. However, this known solution has the disadvantage of requiring perfect alignment between the control means and the rod of the closure member in order for the control means to engage the rod. In addition, this known solution may lead to transverse loads (i.e. loads directed perpendicular to the axis of the rod) being transmitted to the rod, and thus also to the closure member attached thereto, which transverse loads may cause over time damages to the seals interposed between the closure member and the body of the dosing device.

Moreover, a dosing device for a dosing machine having the features specified in the preamble of the attached independent claim 1 is known from EP0604257-A1.

### Summary of the invention

It is an object of the present invention to provide a dosing device for a dosing machine which allows to overcome the drawbacks of the prior art mentioned above.

This and other objects are fully achieved according to the present invention by means of a dosing device as defined in the attached independent claim 1.

Further advantageous features of the dosing device according to the invention are defined in the dependent claims, the subject-matter of which is to be understood as forming part of the following description.

In summary, the present invention is based on the idea of providing each dosing device with a mechanical transmission unit arranged to cause upward movement of the rod associated to the closure member of the dosing device as a result of the downward movement of a control member of the dosing head of the machine, wherein the mechanical transmission unit comprises a casing attached to a top portion of the body of the dosing device, an input member protruding upwardly from the casing to be operated by the control member, an output member which is connected to the rod of the dosing device so as to be drivingly connected for vertical translational movement therewith, and a motion conversion mechanism for converting the downward vertical translational movement of the input member into an upward vertical translational movement of the output member.

Thanks to such a transmission unit, it is possible to uncouple the rod of the dosing device from the control member of the dosing head and thus to avoid the drawbacks of the prior art described above, in particular to avoid the transmission of horizontal loads to the rod, and thus to the closure member, of the dosing device.

### Brief description of the drawings

Further features and advantages of the present invention will become more evident from the following description, which is given purely by way of non-limiting example with reference to the accompanying drawings, where:
- Figure 1 is a perspective view of the dosing head of a dosing machine provided with a plurality of dosing devices according to the present invention;
- Figure 2 is a side view of the dosing head of Figure 1, showing two radially opposed dosing devices arranged one in the rest position and the other in the working position; and
- Figure 3 is a front view, partially in section, of one of the dosing devices of the dosing head of Figure 1.

### Detailed description

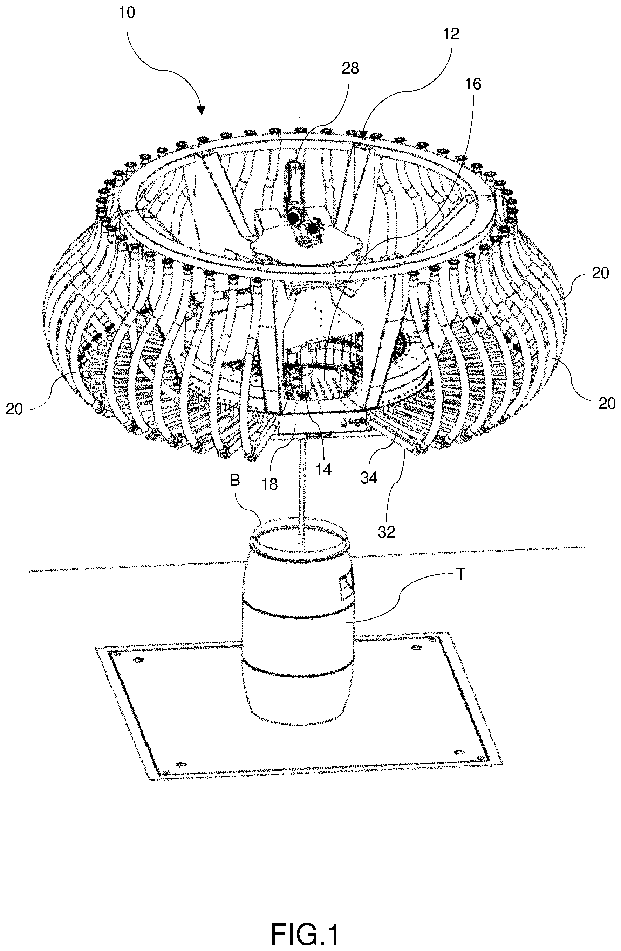

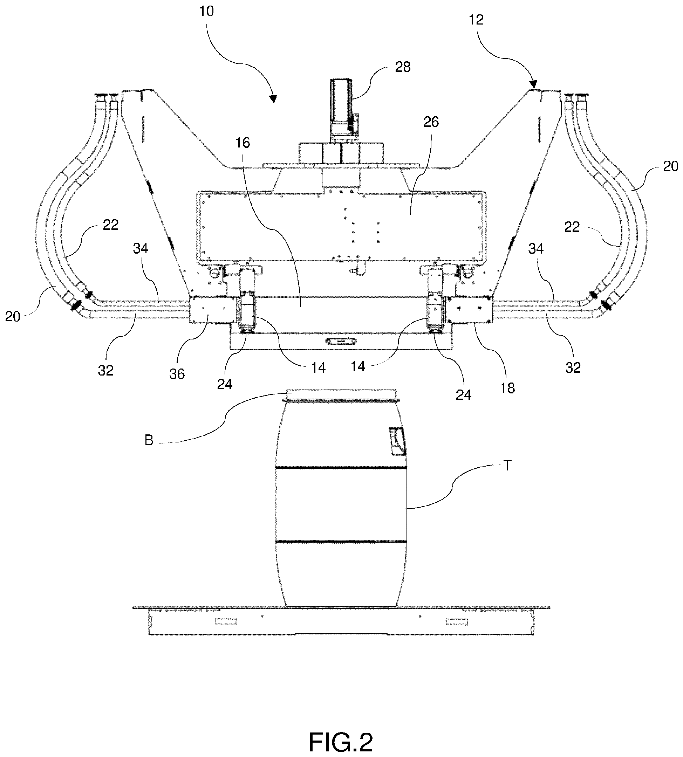

Referring first to Figures 1 and 2, a dosing head of a dosing machine for delivering dosed amounts of fluid products is generally indicated 10. The dosing machine further comprises, in a per-se-known manner, a frame (not shown) supporting the dosing head 10 at a certain height from the ground, so as to enable a tank or vessel T to be arranged underneath the dosing head 10 to be filled with the fluid product(s) delivered by the machine through the dosing head 10. This frame also supports a plurality of containers (also not shown) containing fluid products different from each other, with which the tank T that is placed each time underneath the dosing head 10 is to be filled according to a given recipe.

The dosing head 10 comprises a support structure 12 on which there are mounted a plurality of dosing devices 14, each associated with a respective container to dispense the fluid product contained in that container into the tank T.

The dosing devices 14 are arranged according to a carousel arrangement around a central opening 16 which is provided in a lower part 18 of the support structure 12 and through which the fluid product to be delivered flows into the tank T (which must therefore be arranged underneath the dosing head 10 so that a mouth B thereof is aligned with the opening 16).

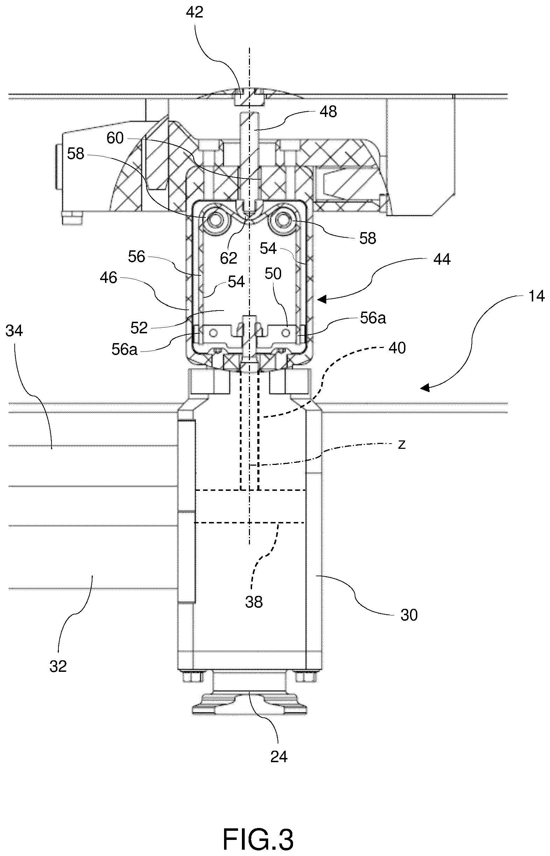

Each dosing device 14 is in fluid communication with the respective container via a pair of conduits 20 and 22 (in Figure 1 only the conduits 20 are shown), that is to say, a supply conduit and a return conduit, respectively, which are made as flexible conduits. Through the supply conduit 20 the fluid product flows in the direction from the container to the dosing device 14, while through the return conduit 22 the fluid product flows in the direction from the dosing device 14 to the container. Furthermore, as can be better observed in Figure 3, each dosing device 14 is provided at its bottom with a vertical-axis delivering nozzle 24, through which the fluid product is delivered in use.

Each dosing device 14 is horizontally movable in a radial direction, i.e. along a rectilinear direction passing through a central axis of the opening 16, between a rest position (as shown in Figure 2 for the dosing device placed on the right), in which the dosing device 14 is spaced apart from the central axis of the opening 16, and a working position (as shown in Figure 2 for the dosing device placed on the left), in which the dosing device 14 is arranged above the opening 16, so that its delivering nozzle 24 is substantially aligned with the central axis of the opening 16 to allow the fluid product delivered by the dosing device 14 to pass through the opening 16 and fall into the tank T through the mouth B.

The movement of the various dosing devices 14 between the rest position and the working position is controlled by a suitable driving system, preferably by a single driving system capable of moving each time the dosing device 14 associated with the container containing the fluid product to be delivered. Referring in particular to Figure 2, such a driving system comprises, for example, a rotating structure 26, which is rotatably mounted on the support structure 12 around a vertical axis of rotation, in particular an axis of rotation coinciding with the central axis of the opening 16, a motor 28 arranged to drive the rotating structure 26 into rotation around its axis of rotation, a gripping member (not shown, but in any case of a per-se-known type) arranged to engage each time one of the dosing devices 14, and a linear actuating device (not shown, but in any case of a per-se-known type), such as, for example, a pneumatic cylinder, arranged to control the movement of the gripping member, and thus of the dosing device 14 engaged therewith, in a radial direction. The rotating structure 26 is thus rotated each time so as to bring the gripping member into alignment with the dosing device 14 which is to be used to deliver the desired fluid product, then the gripping member is controlled so as to engage said dosing device 14, and finally the dosing device 14 is moved by the linear actuating device from the rest position to the working position, to be then returned to the rest position once the desired amount of that fluid product has been delivered.

Each dosing device 14 comprises an internally hollow body 30, at the lower end of which the aforementioned delivering nozzle 24 is located. Two straight rigid tubes 32 and 34 are rigidly connected to the body 30 and are arranged parallel to each other, in particular one above the other with their respective longitudinal axes lying in the same vertical plane passing through the central axis of the opening 16. More specifically, the two tubes 32 and 34 are each connected with their respective radially inner end to the body 30 so as to be in fluid communication with the latter. Furthermore, the two tubes 32 and 34 are connected with their respective radially outer end to the supply conduit 20 and to the return conduit 22, respectively. Each fluid product contained in one of the containers can then flow from the respective container to the body 30 of the respective dosing device 14 via the respective supply conduit 20 and the respective tube 32 and can return from the body 30 of the respective dosing device 14 to the respective container via the respective tube 34 and the respective return conduit 22.

The two tubes 32 and 34 associated with each dosing device 14 are slidably mounted in respective through holes (not shown), which are provided in a respective guide block 36 of the support structure 12 of the dosing head 10 around the opening 16 and extend parallel to each other, in the present case with their respective axes lying in the same vertical plane passing through the central axis of the opening 16. Therefore, the two tubes 32 and 34 act not only as conduits for allowing the fluid product to flow to/from the respective dosing device 14, but also as guide elements which, by sliding in one direction or the other in the respective through holes in the guide block 36, guide the respective dosing device 14 in its horizontal movement in a radial direction between the rest position and the working position defined above.

Referring now to Figure 3, a closure member 38 (shown in a purely schematical manner) is provided within the body 30 of each dosing device 14, and is mounted vertically movable between a raised position, or delivering position, in which it allows the fluid product arriving within the body 30 via the tube 32 to flow solely towards the delivering nozzle 24, for delivering the fluid product from the dosing device 14, and a lowered position, or recirculation position, in which it allows the fluid product arriving within the body 30 through the tube 32 to flow solely to the tube 34, for recirculation of the fluid product to the container. A rod 40 is attached to the closure member, which rod protrudes upwardly from the body 30 and is vertically operable by means of a control member 42 of the dosing head 10 via a mechanical transmission unit 44 mounted on the body 30 of the dosing device 14.

The mechanical transmission unit 44 is configured to control the upward movement of the rod 40, to move the closure member 38 from the lowered position to the raised position, as a result of the downward movement of the control member 42, wherein said downward movement is controlled by an actuating device (not shown, but anyway of a per-se-known type) of the dosing head 10, which actuating device may comprise, for example, a pneumatic cylinder or an electric motor associated with a motion conversion mechanism for converting a rotary motion into a translational motion, such as, for example, a slider-crank mechanism).

The mechanical transmission unit 44 basically comprises a casing 46 attached to a top portion of the body 30 of the dosing device 14, a vertically movable input member 48, which protrudes upwardly from the casing 46 to be actuated by the control member 42, an output member 50 which is connected (in particular rigidly connected) to the rod 40 of the dosing device 14 so as to be drivingly connected for vertical translational movement therewith, and a motion conversion mechanism for converting the downward vertical translational movement of the input member 48 into an upward vertical translational movement of the output member 50. Therefore, by moving the input member 48 of the mechanical transmission unit 44 downwardly by means of the control member 42 of the dosing head 10 an upward displacement of the output member 50 of the mechanical transmission unit 44, and thus of the rod 40 and the closure member 38 of the dosing device 14, is obtained, whereby the closure member 38 is moved from the lowered position to the raised position to allow the fluid product to be delivered by the dosing device 14. Advantageously, the motion conversion mechanism is configured to ensure a given proportionality between the magnitude of the vertical displacement of the inlet organ 48 and the magnitude of the vertical displacement of the outlet organ 50, and thus a given proportionality between the magnitude of the vertical displacement of the control member 42 and the magnitude of the vertical displacement of the closure member 38. It is thus possible to continuously adjust the vertical position of the closure member 38, and therefore to continuously adjust the flow rate at which the fluid product is delivered by the dosing device 14.

According to the embodiment illustrated herein, the output member 50 of the mechanical transmission unit 44 is mounted in an inner cavity 52 of the casing 46 and is suitably guided along the lateral surface of the inner cavity 52 so as to maintain during its vertical movement a perfectly horizontal attitude, thereby avoiding oscillations of the rod 40, which is rigidly connected to the output member 50, with respect to the vertical direction. In particular, the output member 50 is guided along a pair of opposite vertical faces 54 of the lateral surface of the inner cavity 52 of the casing 46.

Furthermore, according to the embodiment illustrated herein, the motion conversion mechanism comprises a rope 56, or similar elongated flexible transmission member (e.g. a belt), which is wound around a pair of pulleys 58 and is attached at its opposite ends 56a to the output member 50. The pulleys 58 are mounted in the inner cavity 52 of the casing 46, in particular in an upper area of the latter, symmetrically positioned with respect to a vertical axis z coinciding with the longitudinal axis of the rod 40. The ends 56a of the rope 56 are attached to the output member 50 in a symmetrical position with respect to the vertical axis z, in particular in such a way that the two branches of the rope 56 extending between the pulleys 58 and the output member 50 are substantially vertical, i.e. substantially parallel to the vertical axis z. The input member 48 of the mechanical transmission unit 44 is formed by a pin, which is arranged with its longitudinal axis substantially coincident with the vertical axis z and extends through a through hole 60 at the upper end of the casing 46. A pressing element 62 is mounted at the lower end of the input member 48 to push on the rope 56. In this way, when the input member 48 is moved downwards through the control member 40, the pressing element 62 carried by the input member 48 exerts a downward thrust on the upper branch of the rope 56 extending between the two pulleys 58, which thrust causes an upward displacement of the two vertical branches of the rope 56, hence of the output member 50 attached thereto, and consequently also of the rod 40 which is attached to the output member 50. Equipping each dosing device 14 with such a mechanical transmission unit 44 allows the rod 40 of the dosing device 14 to be uncoupled from the control member 42 of the dosing head 10. In this way, any horizontal loads on the control member 42 are transmitted only to the input member 48 of the mechanical transmission unit 44, but not to the output member 50 of said unit, and therefore not to the rod 40 of the dosing device 14, which makes it possible to prevent such loads from damaging the seals that are provided between the closure member 38 and the body 30 of the dosing device 14.

The present invention has been described herein with reference to a preferred embodiment thereof. It is to be understood that other embodiments may be envisaged within the scope of the invention, as defined by the appended claims.

For example, although the invention has been illustrated herein with reference to its application to a dosing machine in which the dosing devices are arranged according to a carousel configuration and are movable between the working position and the rest position by means of a single driving system, it is equally applicable to dosing devices for dosing machines having a configuration different from that of the dosing machine illustrated herein.

Furthermore, although the invention has been illustrated herein with reference to its application to a dosing machine in which each dosing device is connected to the respective container via a pair of conduits, namely a supply conduit and a return conduit, it is equally applicable to the case in which each dosing device is connected to the respective container via the supply conduit only.

In addition, although the invention has been illustrated herein with reference to its application to a dosing machine in which a pair of straight rigid tubes acting both as guide elements and as conduits for fluid passage are connected to the body of each dosing device, it is likewise applicable to the case where the supply conduit and the return conduit (if any) are directly connected to the body of the respective dosing device and special guide elements, such as a pair of rods, acting only as guide elements and not also as conduits, are provided to guide the radial translational movement of the dosing device.

## Claims

1. Dosing device (14) for a dosing machine for delivering dosed amounts of fluid products, the dosing device (14) comprising:
- a body (30) provided at its bottom with a delivering nozzle (24) for delivering the fluid product,
- a closure member (38) received in a vertically movable manner inside the body (30) to move between a raised position and a lowered position, in which it allows and prevents, respectively, the flow of the fluid product out of the body (30) through the delivering nozzle (24), and
- a rod (40) attached to the closure member (38) and protruding upwardly from the body (30),
**characterized in that** it further comprises a mechanical transmission unit (44) arranged to control the upward movement of the rod (38) as a result of the downward movement of a control member (42) of the dosing machine, wherein said mechanical transmission unit (44) comprises a casing (46) attached to a top portion of the body (30) of the dosing device (14), a vertically movable input member (48) which protrudes upwardly from the casing (46) to be operated by said control member (42), an output member (50) which is connected to the rod (40) of the dosing device (14) so as to be drivingly connected for vertical translational movement therewith, and a motion conversion mechanism (56, 58, 62) for converting the downward vertical translational movement of the input member (48) into an upward vertical translational movement of the output member (50).

2. Device according to claim 1, wherein the motion conversion mechanism (56, 58, 62) comprises an elongated flexible transmission member (56) and a pair of pulleys (58) mounted in an upper region of an inner cavity (52) of the casing (46), wherein said elongated flexible transmission member (56) is wound around the pulleys (58) and is attached at its opposite ends (56a) to the output member (50).

3. Device according to claim 2, wherein the motion conversion mechanism (56, 58, 62) further comprises a pressing element (62) mounted at a lower end of the input member (48) to act onto an upper branch of the elongated flexible transmission member (56) extending between the two pulleys (58).

4. Device according to claim 2 or claim 3, wherein the pulleys (58) are arranged symmetrically with respect to a vertical axis (z) coinciding with a longitudinal axis of the rod (40), and wherein said opposite ends (56a) of the elongated flexible transmission member (56) are attached to the output member (50) in a symmetrical position with respect to said vertical axis (z).

5. Device according to any one of the preceding claims, wherein the input member (48) of the mechanical transmission unit (44) is formed by a pin, which is arranged with its longitudinal axis coincident with a longitudinal axis of the rod (40).

6. Dosing machine for delivering dosed amounts of fluid products, comprising a dosing head (10) with a plurality of dosing devices (14) according to any one of the preceding claims and with a vertically movable control member (42) for controlling each time the input member (48) of the mechanical transmission unit (44) of one of the dosing devices (14).

## Patentansprüche

1. Dosiervorrichtung (14) für eine Dosiermaschine zum Abgeben dosierter Mengen fluider Produkte, die Dosiervorrichtung (14) umfassend:
- einen Körper (30), der an seiner Unterseite mit einer Abgabedüse (24) zum Abgeben des fluiden Produkts versehen ist,
- ein Verschlussteil (38), das in einer vertikal bewegbaren Weise in dem Körper (30) aufgenommen ist, um sich zwischen einer angehobenen Position und einer abgesenkten Position, in der es den Fluss des fluiden Produkts aus dem Körper (30) durch die Abgabedüse (24) zulässt bzw. verhindert, zu bewegen, und
- eine Stange (40), die an dem Verschlussteil (38) befestigt ist und von dem Körper (30) nach oben vorsteht,
**dadurch gekennzeichnet, dass** sie ferner eine mechanische Übertragungseinheit (44), die arrangiert ist, um die Bewegung der Stange (38) nach oben infolge der Bewegung nach unten eines Steuerteils (42) der Dosiermaschine zu steuern, umfasst, wobei die mechanische Übertragungseinheit (44) ein Gehäuse (46), das an einem oberen Abschnitt des Körpers (30) der Dosiervorrichtung (14) befestigt ist, ein vertikal bewegbares Antriebsteil (48), das von dem Gehäuse (46) nach oben vorsteht, um von dem Steuerteil (42) gesteuert zu werden, ein Abtriebsteil (50), das mit der Stange (40) der Dosiervorrichtung (14) verbunden ist, um für eine vertikale Translationsbewegung damit antriebsmäßig verbunden zu sein, und einen Bewegungsumwandlungsmechanismus (56, 58, 62), zum Umwandeln der vertikalen Translationsbewegung des Antriebsteils (48) nach unten in eine vertikale Translationsbewegung des Abtriebsteils (50) nach oben, umfasst.

2. Vorrichtung nach Anspruch 1, wobei der Bewegungsumwandlungsmechanismus (56, 58, 62) ein längliches flexibles Übertragungsteil (56) und ein Paar Rollen (58), die in einem oberen Bereich eines inneren Hohlraums (52) des Gehäuses (46) montiert sind, umfasst, wobei das längliche flexible Übertragungsteil (56) um die Rollen (58) gewickelt ist und an seinen gegenüberliegenden Enden (56a) an dem Abtriebsteil (50) befestigt ist.

3. Vorrichtung nach Anspruch 2, wobei der Bewegungsumwandlungsmechanismus (56, 58, 62) ferner ein Druckelement (62), umfasst, das an einem unteren Ende des Antriebsteils (48) befestigt ist, um auf einen oberen Zweig des länglichen flexiblen Übertragungsteils (56), der sich zwischen den zwei Rollen (58) erstreckt, einzuwirken.

4. Vorrichtung nach Anspruch 2 oder 3, wobei die Rollen (58) hinsichtlich einer vertikalen Achse (z) symmetrisch arrangiert sind, zusammenfallend mit einer Längsachse der Stange (40), und wobei die gegenüberliegenden Enden (56a) des länglichen flexiblen Übertragungsteils (56) an dem Ausgangsteil (50) in einer symmetrischen Position hinsichtlich der vertikale Achse (z) befestigt sind.

5. Vorrichtung nach einem der vorstehenden Ansprüche, wobei das Antriebsteil (48) der mechanischen Übertragungseinheit (44) durch einen Stift, so arrangiert, dass seine Längsachse mit einer Längsachse der Stange (40) zusammenfällt, ausgebildet ist.

6. Dosiermaschine zum Abgeben dosierter Mengen fluider Produkte, umfassend einen Dosierkopf (10) mit einer Vielzahl von Dosiervorrichtungen (14) nach einem der vorstehenden Ansprüche und mit einem vertikal bewegbaren Steuerteil (42) zum jedes Mal Steuern des Antriebsteils (48) der mechanischen Übertragungseinheit (44) einer der Dosiervorrichtungen (14).

## Revendications

1. Dispositif de dosage (14) destiné à une machine de dosage permettant de distribuer des quantités dosées de produits fluides, le dispositif de dosage (14) comprenant :
- un corps (30) pourvu au niveau de son fond, d'une buse de distribution (24) permettant de distribuer le produit fluide,
- un élément de fermeture (38) reçu d'une manière déplaçable verticalement à l'intérieur du corps (30) pour se déplacer entre une position relevée et une position abaissée, dans lesquelles il permet et empêche, respectivement, l'écoulement du produit fluide hors du corps (30) à travers la buse de distribution (24), et
- une tige (40) fixée à l'élément de fermeture (38) et faisant saillie vers le haut à partir du corps (30),
**caractérisé en ce qu'**il comprend en outre une unité de transmission mécanique (44) agencée pour commander le déplacement vers le haut de la tige (38) en conséquence du déplacement vers le bas d'un élément de commande (42) de la machine de dosage, dans lequel ladite unité de transmission mécanique (44) comprend un boîtier (46) fixé à une partie supérieure du corps (30) du dispositif de dosage (14), un élément d'entrée (48) déplaçable verticalement qui fait saillie vers le haut à partir du boîtier (46) pour être mis en fonctionnement par ledit élément de commande (42), un élément de sortie (50) qui est relié à la tige (40) du dispositif de dosage (14) de façon à être relié par entraînement pour un déplacement vertical en translation avec celui-ci, et un mécanisme de conversion de mouvement (56, 58, 62) permettant de convertir le déplacement vertical en translation vers le bas de l'élément d'entrée (48) en un déplacement vertical en translation vers le haut de l'élément de sortie (50).

2. Dispositif selon la revendication 1, dans lequel le mécanisme de conversion de mouvement (56, 58, 62) comprend un élément de transmission flexible allongé (56) et une paire de poulies (58) montées dans une région supérieure d'une cavité interne (52) du boîtier (46), dans lequel ledit élément de transmission flexible allongé (56) est enroulé autour des poulies (58) et est fixé au niveau de ses extrémités opposées (56a) à l'élément de sortie (50).

3. Dispositif selon la revendication 2, dans lequel le mécanisme de conversion de mouvement (56, 58, 62) comprend en outre un élément de pressage (62) monté au niveau d'une extrémité inférieure de l'élément d'entrée (48) pour agir sur une branche supérieure de l'élément de transmission flexible allongé (56) s'étendant entre les deux poulies (58).

4. Dispositif selon la revendication 2 ou la revendication 3, dans lequel les poulies (58) sont agencées symétriquement par rapport à un axe vertical (z) coïncidant avec un axe longitudinal de la tige (40), et dans lequel lesdites extrémités opposées (56a) de l'élément de transmission flexible allongé (56) sont fixées à l'élément de sortie (50) dans une position symétrique par rapport audit axe vertical (z).

5. Dispositif selon l'une quelconque des revendications précédentes, dans lequel l'élément d'entrée (48) de l'unité de transmission mécanique (44) est formé par une broche, qui est agencée avec son axe longitudinal coïncident avec un axe longitudinal de la tige (40).

6. Machine de dosage permettant de distribuer des quantités dosées de produits fluides, comprenant une tête de dosage (10) avec une pluralité de dispositifs de dosage (14) selon l'une quelconque des revendications précédentes et avec un élément de commande (42) déplaçable verticalement permettant de commander chaque fois l'élément d'entrée (48) de l'unité de transmission mécanique (44) de l'un des dispositifs de dosage (14).
